# EUROPEAN PATENT SPECIFICATION

(11) **EP 2 037 103 B1**
(45) Date of publication and mention of the grant of the patent: **29.04.2015**
(21) Application number: 08253023.9
(22) Date of filing: 12.09.2008
(51) Int. Cl.: F02D 37/02, F02D 41/00

(54) **Control device for internal combustion engine**
Steuervorrichtung für eine Brennkraftmaschine
Dispositif de contrôle pour moteur à combustion interne

(30) Priority: 14.09.2007 JP 2007239423
(43) Date of publication of application: 18.03.2009
(73) Proprietor: Yamaha Hatsudoki Kabushiki Kaisha, Iwata-shi, Shizuoka 438-8501 (JP)
(72) Inventor: Nakamura, Michihisa, Shizuoka-ken 438-8501 (JP); Nonaka, Daisuke, Shizuoka-ken 438-8501 (JP); Kihara, Hirotaka, Shizuoka-ken 438-8501 (JP)
(74) Representative: Moreland, David

(56) References cited:
- DE-A1-102007 034 189
- US-A- 4 993 386
- US-A- 5 327 866

## Description

### FIELD OF THE INVENTION

The present invention relates to a control device for an internal combustion engine and a straddle-type vehicle including the control device.

### BACKGROUND TO THE INVENTION

There are known internal combustion engines that can use a blended fuel that is a mixture of gasoline and alcohol, or that can selectively use gasoline and alcohol. For this type of internal combustion engine, it is necessary to perform control that accords with fuel characteristics. To address this, in known art, a technology has been proposed in which a sensor that detects the mixing ratio of alcohol contained in fuel is provided, and the ignition timing or the air-fuel ratio is controlled based on the detection value of the sensor.

When a fuel that only contains gasoline or a fuel that contains a small mixing ratio of alcohol (hereinafter simply referred to as a fuel with a small alcohol mixing ratio) is used, knocking is more likely to occur, as compared to a case where a fuel that only contains alcohol or a fuel that contains a large mixing ratio of alcohol (hereinafter simply referred to as a fuel with a large alcohol mixing ratio) is used. Therefore, when a fuel with a small alcohol mixing ratio is used, an optimal injection timing is more retarded, as compared to a case where a fuel with a large alcohol mixing ratio is used. Further, when the fuel with a small alcohol mixing ratio is used, an optimal air-fuel ratio has a smaller value, as compared to the case where the fuel with a large alcohol mixing ratio is used.

Note that, for example, when a fuel with a large alcohol mixing ratio is supplied to an internal combustion engine that has been operating using a fuel with a small alcohol mixing ratio, the fuel characteristics vary significantly. Accordingly, in some cases, knocking may occur after refueling if the control target value of the ignition timing or the air-fuel ratio is not rapidly changed in response to a change in the alcohol mixing ratio.

JP-UM-A-01-108365 describes an ignition timing control device that includes a sensor that detects the mixing ratio of alcohol, and corrects the sensor output. In this ignition timing control device, in order to inhibit such above-described knocking, until the sensor output is corrected after refueling, the most retarded value is adopted from among an optimum ignition timing when using a fuel containing only gasoline and an optimum ignition timing when using a fuel containing only methanol.

The ignition timing control device described in JP-UM-A-01-108365 has a premise that a sensor that detects the mixing ratio of alcohol be used. However, there is a need to control an internal combustion engine that can use a blended fuel and the like without using such a sensor. Accordingly, the ignition timing control device described in JP-UM-A-01-108365 does not satisfy the need.

The invention has been devised in light of the above-described problem, and it is an object thereof to inhibit knocking after refueling without providing a sensor that detects the mixing ratio of alcohol, in an internal combustion engine that can use a blended fuel that is a mixture of gasoline and alcohol or that can selectively use gasoline and alcohol.

### SUMMARY OF THE INVENTION

Described herein is a control device for an internal combustion engine having a fuel tank and an igniter, and that is capable of using at least one or a blended combination of gasoline and alcohol as fuel, the control device comprising:
refueling detection means for detecting refueling of a fuel tank; and
an ignition control unit comprising:
   mixing ratio estimating means for estimating a mixing ratio of alcohol contained in fuel based on an operation state of the internal combustion engine;
   estimation completion determining means for determining whether estimation is completed by the mixing ratio estimating means; and
   ignition control means for igniting the igniter at an ignition timing that is retarded from an optimum ignition timing based on an actual mixing ratio, during a predetermined period until the estimation completion determining means determines that the estimation is completed after the refueling detection means has detected refueling.

The aspects of the present invention are set forth in the independent claims.

Also, preferred but non-essential features of the invention are set forth in the dependent claims.

Aspects of the present invention relate to methods of controlling an engine, for example by utilizing a control device of other aspects.

Further, aspects of the present invention may relate to an engine comprising a control device of another aspect.

Described herein is a control device for an internal combustion engine that includes a fuel tank and an igniter, and that is capable of selectively using gasoline and alcohol as fuel or is capable of using a blended fuel that is a mixture of gasoline and alcohol. The control device includes refueling detection means for detecting one of the presence and absence of refueling of the fuel tank, and an ignition control unit that controls the igniter. The ignition control unit includes mixing ratio estimating means for estimating a mixing ratio of alcohol contained in fuel based on an operation state of the internal combustion engine, estimation completion determining means for determining whether estimation is completed by the mixing ratio estimating means, and ignition control means for igniting the igniter at an ignition timing that is retarded from an optimum ignition timing based on an actual mixing ratio, during a predetermined period until the estimation completion determining means determines that the estimation is completed after the refueling detection means has detected refueling.

According to the invention, it is possible to inhibit knocking after refueling without providing a sensor that detects the mixing ratio of alcohol, in an internal combustion engine that can use a blended fuel that is a mixture of gasoline and alcohol or that can selectively use gasoline and alcohol.

### BRIEF DESCRIPTION OF THE DRAWINGS

These and other aspects of the present invention will now be described, by way of example only, with reference to the accompanying drawings, in which:
FIG. 1 is a side view of a motorcycle;
FIG. 2 is a diagram of the structure of an engine and various sensors;
FIG. 3 is a flow chart of engine control according to a first embodiment;
FIG. 4 is the flow chart of the engine control according to the first embodiment;
FIG. 5 is a block diagram of fuel injection control according to the first embodiment;
FIG. 6 is a flow chart of the fuel injection control;
FIG. 7 is a flow chart of calculation of a target air-fuel ratio;
FIG. 8 is an explanatory diagram of an O₂ feedback correction coefficient;
FIG. 9 is a diagram explaining an increase/decrease value of the mixing ratio of ethanol;
FIG. 10 is a diagram explaining the relationship between the mixing ratio of ethanol and a stoichiometric air-fuel ratio;
FIG. 11 is a diagram showing QT properties;
FIG. 12 is a flow chart of engine control according to a second embodiment;
FIG. 13 is the flow chart of the engine control according to the second embodiment; and
FIG. 14 (a) to FIG. 14 (c) are diagrams each showing a change pattern of the mixing ratio of ethanol in a fuel after refueling.

### DETAILED DESCRIPTION OF THE DRAWINGS

### First Embodiment

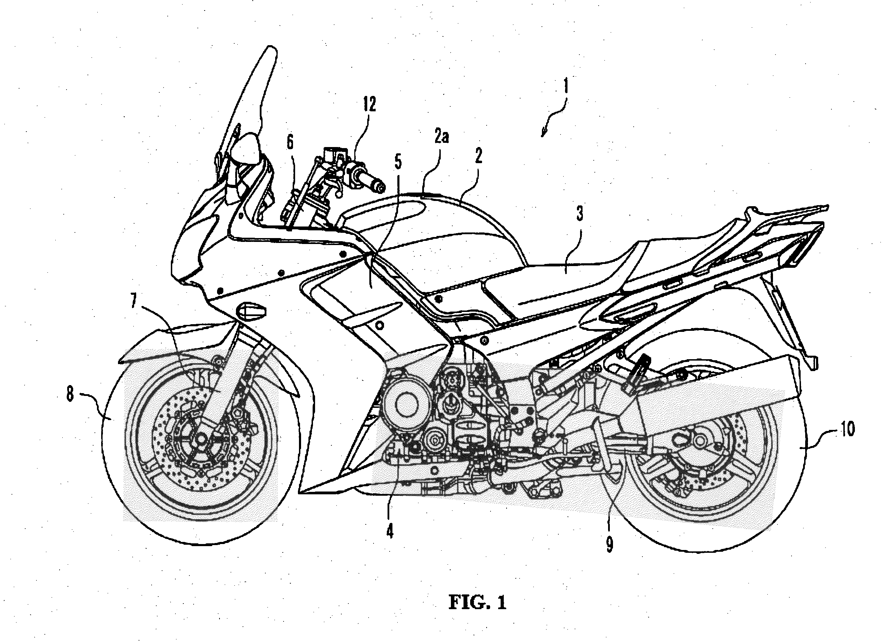

FIG. 1 shows a motorcycle 1 that is a straddle-type vehicle according to an embodiment of the invention. The type of the motorcycle 1 is not particularly limited, and the motorcycle 1 may be a so-called motorcycle, a scooter, a moped, a motocross bike etc. Further, the straddle-type vehicle according to the invention is a vehicle used by a rider sitting astride the vehicle, or a similar type vehicle. It is not limited to a motorcycle, and may be an ATV (all terrain vehicle) etc.

The motorcycle 1 can use, as fuel, gasoline, alcohol such as ethanol, and a blended fuel that is a mixture of gasoline and alcohol. In the following description, ethanol is used as an example of alcohol.

As shown in FIG. 1, the motorcycle 1 includes a fuel tank 2, a riding seat 3, an engine 4, and a body frame 5 that supports them. The fuel tank 2 is provided with a cap 2a. A head pipe 6 is provided on the front side of the body frame 5. The head pipe 6 supports a steering shaft (not shown in the figures), and a handle 12 is provided on the upper end of the steering shaft. Further, a front fork 7 is provided on the lower end of the steering shaft. A front wheel 8 is rotatably supported at the lower end of the front fork 7. The body frame 5 swingably supports a swing arm 9, and a rear wheel 10 is rotatably supported at the lower end of the swing arm 9.

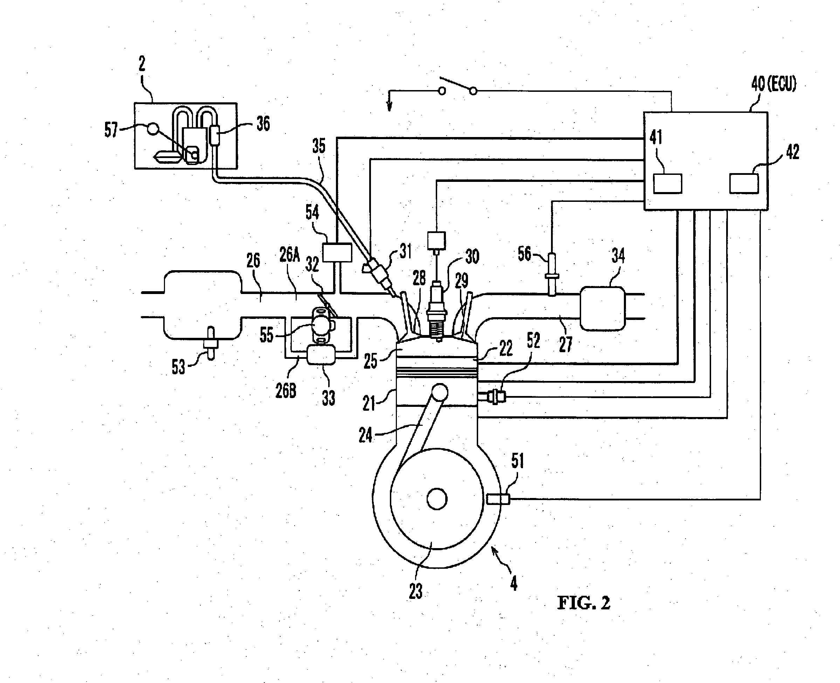

As shown in FIG. 2, the engine 4 is provided with a cylinder 21, a piston 22 that reciprocates in the cylinder 21, a crank shaft 23, and a connecting rod 24 that connects the piston 22 with the crank shaft 23. Further, the engine 4 is provided with a fuel injection valve 31 that injects fuel, and an igniter 30 that ignites fuel in a combustion chamber 25. The engine 4 includes a rotation speed sensor 51 that detects the rotation speed of the crank shaft 23, and a temperature sensor 52 that detects the temperature of the engine 4. Note that the temperature sensor 52 may be a sensor that detects the temperature of a section (for example, the cylinder) of the engine 4. When the engine 4 is of a water-cooled type, the temperature sensor 52 may be a sensor that detects the temperature of cooling water. That is, the temperature sensor 52 may be a sensor that directly detects the temperature of the engine 4, or may be a sensor that indirectly detects the temperature of the engine 4 via cooling water or the like.

The engine 4 includes an intake passage 26 that introduces air into the combustion chamber 25, an intake valve 28 that opens and closes between the intake passage 26 and the combustion chamber 25, an exhaust passage 27 that discharges exhaust gas from the combustion chamber 25, and an exhaust valve 29 that opens and closes between the combustion chamber 25 and the exhaust passage 27. In this embodiment, the fuel injection valve 31 is arranged to inject fuel into the intake passage 26. However, the fuel injection valve 31 may be a valve that injects fuel into the combustion chamber 25.

The intake passage 26 is provided with a temperature sensor 53 that detects the temperature of intake air, and a pressure sensor 54 that detects an intake pressure that is the internal pressure of the intake passage 26. The intake passage 26 includes a main passage 26A that accommodates a throttle valve 32, and a bypass passage 26B that bypasses the throttle valve 32. The throttle valve 32 is provided with a throttle position sensor 55 that detects the opening degree of the throttle valve 32. The bypass passage 26B is provided with a flow rate adjusting mechanism 33 that controls the amount of bypass by adjusting the flow area.

A catalyst 34 is provided in the exhaust passage 27. Further, an O₂ sensor 56, serving as an air-fuel ratio sensor, that detects oxygen contained in exhaust gas is provided in the exhaust passage 27. It is sufficient that the air-fuel ratio sensor can at least detect whether the air-fuel ratio is on a rich side or a lean side. The O₂ sensor 56 according to this embodiment can detect whether the air-fuel ratio is on the rich side or the lean side. Note that, it is readily apparent that a sensor that linearly outputs the air-fuel ratio (a linear A/F sensor), namely, a sensor that outputs the air-fuel ratio itself may be used as the air-fuel ratio sensor.

The fuel tank 2 and the fuel injection valve 31 are connected by a fuel pipe 35. A fuel pump 36 that supplies fuel toward the fuel pipe 35, and a fuel sensor 57 that detects the amount of fuel in the fuel tank 2 are provided inside the fuel tank 2. There is no limitation on a specific structure of the fuel sensor 57. For example, a well-known sensor such as a fluid level sensor can be preferably used. Note that, the motorcycle 1 does not include a sensor that detects the concentration of ethanol in the fuel tank 2.

The motorcycle 1 includes an ECU (Electric Control Unit) 40 that controls the engine 4. The ECU 40 includes an arithmetic unit 41 that performs various calculations to be described later, and a storage unit 42 that stores control programs for performing a control to be described later and various pieces of information. There is no limitation on hardware configurations of the arithmetic unit 41 and the storage unit 42. For example, a CPU can be favorably used as the arithmetic unit 41, and a ROM or a RAM can be favorably used as the storage unit 42. In this embodiment, the storage unit 42 includes a non-volatile memory. The above-described sensors are connected to the ECU 40, and detection signals are transmitted from the respective sensors to the ECU 40. More specifically, the rotation speed sensor 51, the temperature sensor 52, the temperature sensor 53, the pressure sensor 54, the throttle position sensor 55, the O₂ sensor 56, and the fuel sensor 57 are connected to the ECU 40.

The ECU 40 controls the fuel injection valve 31 so that the air-fuel ratio becomes a target air-fuel ratio, and also controls the ignition timing of the igniter 30. In addition, along with a feedback control, the ECU 40 learns the mixing ratio of ethanol based on detection values of the O₂ sensor 56, and controls the fuel injection valve 31 and the igniter 30 in accordance with the mixing ratio of ethanol. However, a certain period of time is required until the O₂ sensor 56 is activated after the engine 4 is started. That is, immediately after the start-up, there is a time period during which the O₂ sensor 56 is not activated. Also, when a fuel with a different mixing ratio of ethanol is supplied, a certain period of time is required until the learning value of the mixing ratio of ethanol converges. That is, there is a time period during which the learning value (in other words, the estimated value) of the mixing ratio of ethanol is inaccurate. To address this, in this embodiment, the following start-up control is performed in order to inhibit knocking even when the O₂ sensor 56 has not been activated or even when the learning value of the mixing ratio of ethanol is an inaccurate value.

The start-up control is roughly classified into the start-up control of the air-fuel ratio, and the start-up control of the ignition timing. The start-up control of the air-fuel ratio is performed in the following manner:
(1) Before the activation of the O₂ sensor 56 and before the consumption of the fuel in the fuel pipe 35, the air-fuel ratio control is performed based on the learning value before start-up;
(2) Before the activation of the O₂ sensor 56 and after the consumption of the fuel in the fuel pipe 35, the air-fuel ratio control is performed to achieve the richest target air-fuel ratio among the target air-fuel ratios based on the estimated mixing ratio; and
(3) After the activation of the O₂ sensor 56, the air-fuel ratio control is performed based on the learning value of the mixing ratio of ethanol.

On the other hand, the start-up control of the ignition timing is performed in the following manner:
(1) Before the learning value of the mixing ratio of ethanol is ascertained, the igniter 30 is ignited at the most retarded ignition timing among the ignition timings, based on the estimated mixing ratio; and
(2) After the learning value of the mixing ratio of ethanol is ascertained, the igniter 30 is ignited at the ignition timing based on the learning value.

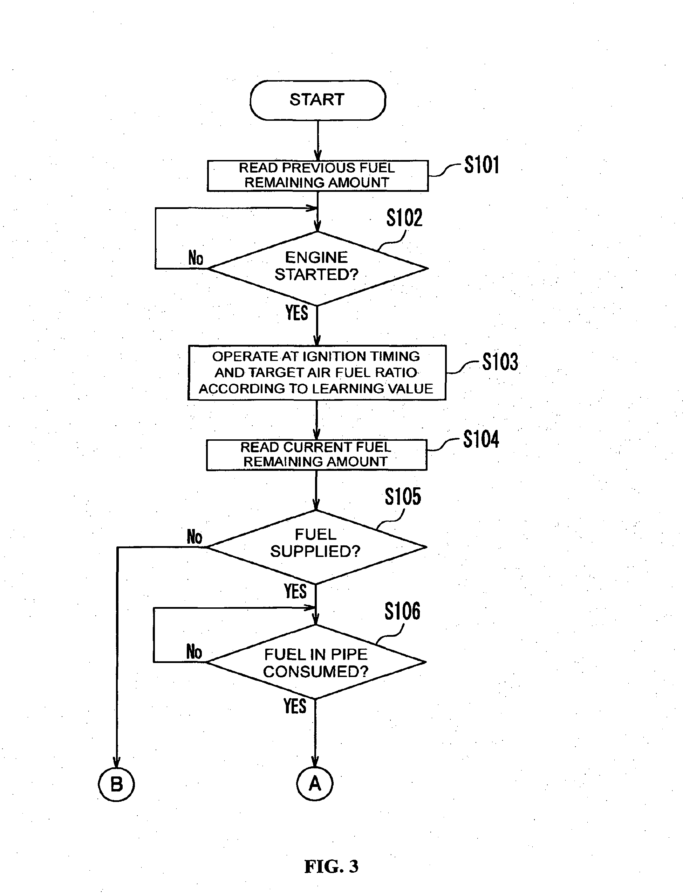

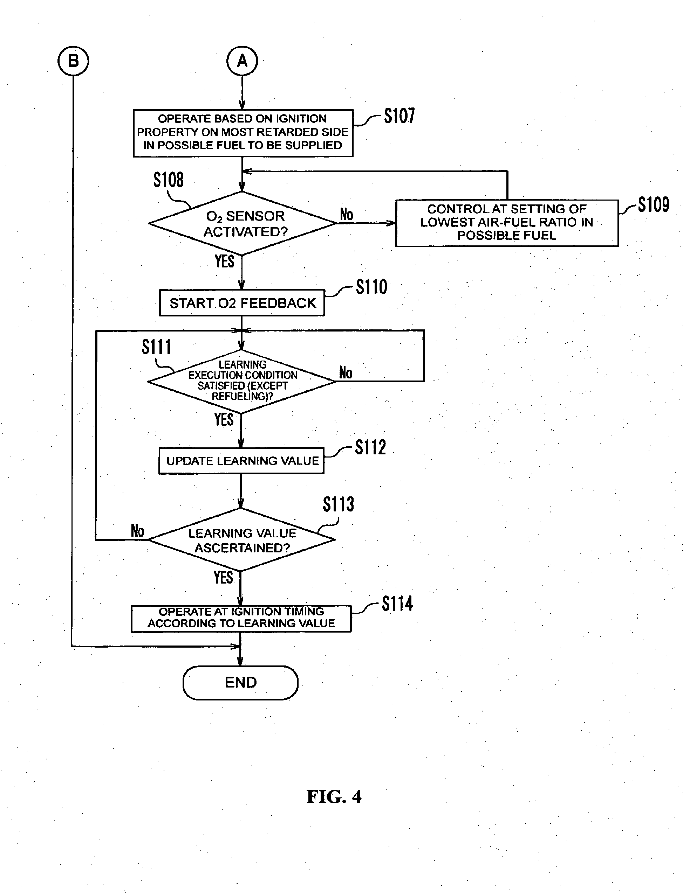

Next, the details of the start-up control will be described with reference to a flowchart shown in FIG. 3 and FIG. 4. First, when a power source of the motorcycle 1 is turned ON, the arithmetic unit 41 of the ECU 40 reads, at step S101, the amount of fuel in the fuel tank 2 when the power source was turned OFF the last time, from the storage unit 42 of the ECU 40. Then, at step S102, it is determined whether or not the engine 4 has been started. If the engine 4 has been started, the process proceeds to step S103.

At step S103, the ignition timing control and the air-fuel ratio control are started based on a previous learning value of the mixing ratio of ethanol. Here, the previous learning value is a learning value at the time at which the power source was lastly turned OFF or the engine was stopped, and the learning value is stored in the storage unit 42 of the ECU 40. Note that the control is performed based on the previous learning value because, even if a fuel with a different mixing ratio of ethanol is supplied, the mixing ratio of ethanol in the fuel injected from the fuel injection valve 31 does not change until the fuel remaining in the fuel pipe 35 has been consumed.

Then, the process proceeds to step S104, and the arithmetic unit 41 receives information about a current amount of fuel in the fuel tank 2 from the fuel sensor 57. Then, at step S105, the arithmetic unit 41 compares the current amount of fuel with the previous amount of fuel (refer to step S101), and determines whether or not fuel has been supplied. More specifically, when there is no substantial difference between the current amount of fuel and the previous amount of fuel, it is determined that fuel has not been supplied. When there is a substantial difference between the current amount of fuel and the previous amount of fuel (for example, when there is a predetermined amount or more of difference between them), it is determined that fuel has been supplied. When it is determined at step S105 that fuel has not been supplied, the start-up control is terminated, and a later-described normal control is performed. On the other hand, when it is determined at step S105 that fuel has been supplied, the process proceeds to step S106.

At step S106, it is determined whether or not the fuel in the fuel pipe 35 has been consumed. The capacity of the fuel pipe 35 is fixed in advance, and the storage unit 42 records the amount of fuel remaining in the fuel pipe 35 (hereinafter referred to as the amount of fuel in the pipe) . On the other hand, the amount of consumed fuel can be calculated by accumulating fuel injection amounts of the fuel injection valve 31. In this embodiment, the accumulated value of the fuel injection amounts of the fuel injection valve 31 is successively stored in the storage unit 42. The arithmetic unit 41 determines whether or not the fuel in the fuel pipe 35 has been consumed based on whether or not the accumulated value of the fuel injection amounts is equal to or more than the amount of fuel in the pipe. More specifically, when the accumulated value of the fuel injection amounts is equal to or more than the amount of fuel in the pipe, it is determined that the fuel in the fuel pipe 35 has been consumed. When the accumulated value of the fuel injection amounts is less than the amount of fuel in the pipe, it is determined that the fuel in the fuel pipe 35 has not been consumed. As a result of the determination at step S106, when it is determined that the fuel in the fuel pipe 35 has not been consumed, the ignition timing control and the air-fuel ratio control based on the previous learning value of the mixing ratio of ethanol are continued. On the other hand, when it is determined that the fuel in the fuel pipe 35 has been consumed, the process proceeds to step S107 (Fig. 4).

After the fuel in the fuel pipe 35 has been consumed, a newly supplied fuel may be injected from the fuel injection valve 31. However, the mixing ratio of ethanol in the supplied fuel is not known. Accordingly, if the ignition control is performed based on the previous learning value, knocking may occur depending on the mixing ratio of ethanol in the supplied fuel. To address this, at step S107, the igniter 30 is ignited at the most retarded ignition timing among optimum ignition timings within an estimated range of mixing ratios of ethanol.

In many cases, the mixing ratio of ethanol in a fuel used for the motorcycle 1 is determined in advance to be within a predetermined range. The lower limit value of the mixing ratio of ethanol in a fuel used in the motorcycle 1 according to this embodiment is set at 22%, and the upper limit value is set at 100% (i.e., an ethanol fuel that includes no gasoline). However, the lower limit value and the upper limit value of the mixing ratio of ethanol may be set at other values. In this embodiment, the estimated range of mixing ratios of ethanol is set between 22% and 100%.

Therefore, when the optimum ignition timing that is calculated based on the previous learning value is not the most retarded optimum ignition timing, the igniter 30 is controlled after changing the optimum ignition timing to the most retarded optimum ignition timing. On the other hand, when the optimum ignition timing that is calculated based on the previous learning value is the most retarded optimum ignition timing, the igniter 30 is ignited at the calculated optimum ignition timing.

After step S107, the process proceeds to step 108, and it is determined whether or not the O₂ sensor 56 has been activated. Note that whether or not the O₂ sensor 56 has been activated can be determined based on, for example, an output signal level of the O₂ sensor 56. When it is determined that the O₂ sensor 56 has not been activated, the process proceeds to step S109. When it is determined that the O₂ sensor 56 has been activated, the process proceeds to step S110.

Although a detailed explanation will be given later, in the learning of the mixing ratio of ethanol, an O₂ feedback correction coefficient based on the detection result of the O₂ sensor 56 is used. Accordingly, the learning of the mixing ratio of ethanol cannot be started until the O₂ sensor 56 is activated. To address this, at step S110, in order to avoid knocking, the fuel injection valve 31 is controlled based on the lowest target air-fuel ratio (in other words, the richest target air-fuel ratio) among the target air-fuel ratios within the estimated range of mixing ratios of ethanol. This control is continued until the O₂ sensor 56 is activated.

After the O₂ sensor 56 is activated, an O₂ feedback control is started at step S110. Then, the process proceeds to step S111, and it is determined whether or not a learning execution condition other than the presence or absence of refueling is satisfied. The learning execution condition is a condition to determine whether or not the learning of the mixing ratio of ethanol is performed, and the learning is not started until this condition is satisfied.

When it is determined at step S111 that the learning condition is satisfied, the process proceeds to step S112, and the learning of the mixing ratio of ethanol is started. More specifically, the previous learning or learned value of the mixing ratio of ethanol is updated to a new learning value. Note that a learning method for the mixing ratio of ethanol will be described later.

It is determined at step S113 whether or not the learning value has been ascertained. In other words, it is determined whether or not the learning value has converged. Note that whether or not the learning value has converged can be determined based on various methods. For example, when the change rate of the learning value over a predetermined time period becomes equal to or less than a predetermined rate, it may be determined that the learning value has converged. Alternatively, when the change amount of the learning value over a predetermined time period becomes equal to or less than a predetermined amount, it may be determined that the learning value has converged. In response to the convergence of the learning value, the process proceeds to step S114, and the ignition control is performed based on the ascertained learning value. As a result, if the optimum ignition timing based on the ascertained learning value is not the most retarded optimum ignition timing, the ignition timing is changed to an ignition timing advanced from the most retarded optimum ignition timing. Note that, if the optimum ignition timing based on the ascertained learning value is the most retarded optimum ignition timing, the ignition timing is not changed, and the control of the igniter 30 based on the most retarded optimum ignition timing is continued.

This completes the description of the details of the start-up control in this embodiment. Note that, when the ECU 40 performs the above-described steps S106, S107, S108, S112 and S113, it functions as consumption determining means, ignition control means, activation determining means, mixing ratio estimating means and estimation completion determining means, respectively.

Next, the O₂ feedback control and the learning of the mixing ratio of ethanol will be described.

The O₂ feedback control according to this embodiment is basically a control that obtains a difference between the actual air-fuel ratio and the target air-fuel ratio based on the detection signal from the O₂ sensor 56, and adjusts the injection amount of the fuel injection valve 31 so that the difference becomes zero. In other words, it is a feedback control based on the detection signal from the O₂ sensor 56. However, a desired target air-fuel ratio changes depending on the ratio of ethanol contained in fuel, namely, the mixing ratio of ethanol. Also, the desired target air-fuel ratio changes depending on the temperature of the engine 4. To address this, in this embodiment, correction of the feedback control is performed, taking into consideration the mixing ratio of ethanol and the engine temperature. Further, in this embodiment, the mixing ratio of ethanol is not directly detected by a sensor, but is estimated based on the detection signal from the O₂ sensor 56.

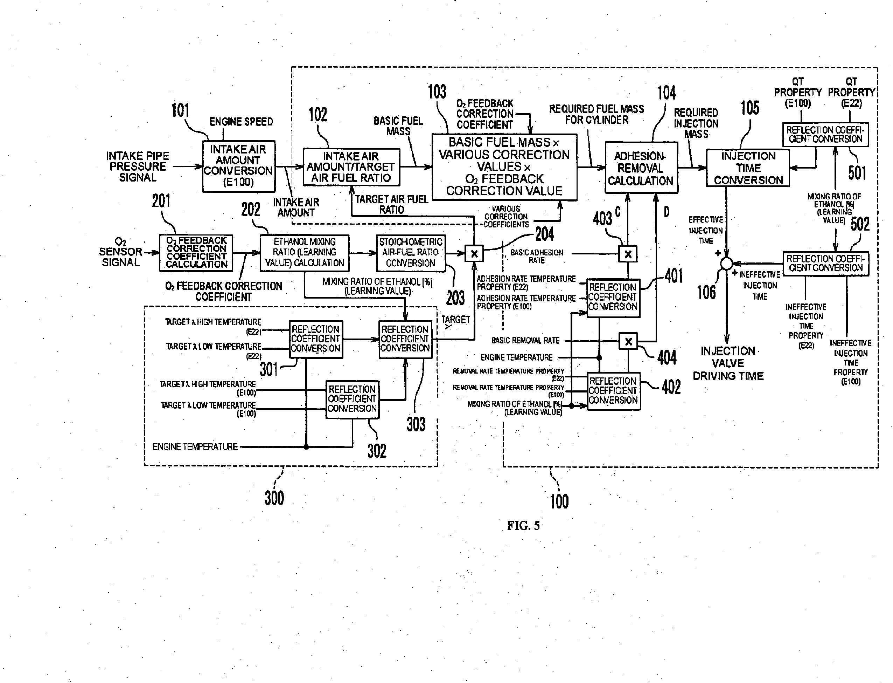

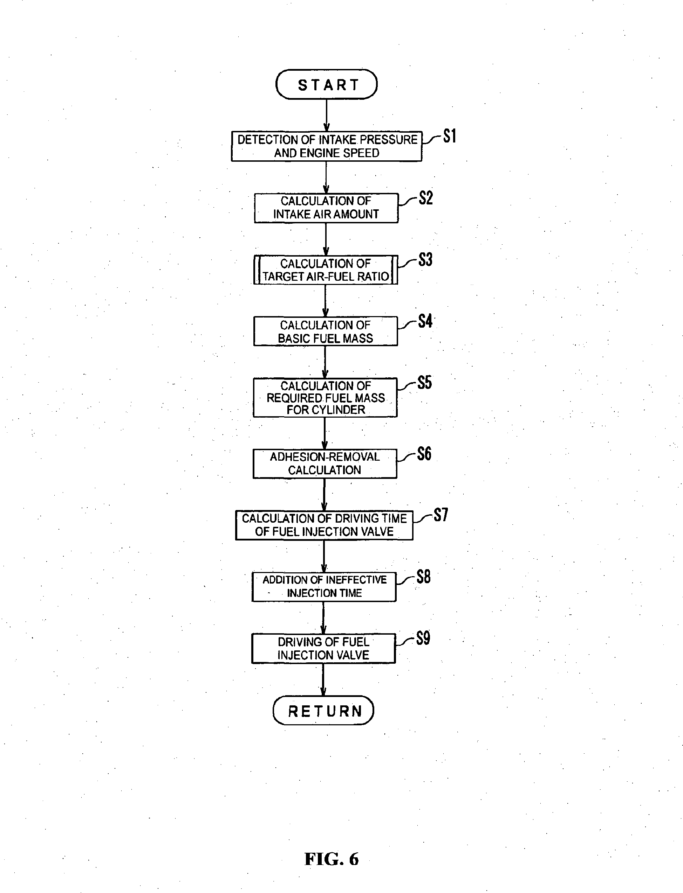

Specific details of the O₂ feedback control will be described with reference to a control block diagram in FIG. 5, and a flowchart in FIG. 6.

First, at step S1, the intake pressure is detected by the pressure sensor 54, and the engine speed is detected by the rotation speed sensor 51. Next, at step S2, an intake air amount calculation portion 101 calculates the intake air amount from the intake pressure and the engine speed, referring to an intake air amount conversion map that has been stored in advance. Note that, in this specification, the term "calculation" includes not only calculating a target value using a mathematical expression, but also obtaining it from a map or the like. In this embodiment, as the aforementioned intake air amount conversion map, an intake air amount conversion map in the case of the mixing ratio of ethanol being 100% (i.e., an ethanol fuel containing no gasoline) is used. However, another intake air amount conversion map may be used.

Next, the process proceeds to step S3, and the target air-fuel ratio is calculated. Note that the calculation of the target air-fuel ratio will be described later in detail.

Next, the process proceeds to step S4, and a calculation portion 102 calculates a basic fuel mass from the intake air amount and the target air-fuel ratio. Here, the basic fuel mass indicates the fuel injection amount before the feedback correction is performed, and it is calculated as follows: basic fuel mass = intake air amount/target air-fuel ratio.

At step S5, the required fuel mass for a cylinder is calculated by a calculation portion 103 that multiplies the basic fuel mass by a predetermined correction coefficient. More specifically, it is calculated as follows: required fuel mass for cylinder = basic fuel mass x various correction coefficients x O₂ feedback correction coefficient. As the various correction coefficients, for example, correction coefficients unique to the engine 4 are used. The correction coefficients can be obtained in advance by experiments and the like.

Next, the process proceeds to step S6, and a calculation portion 104 performs an adhesion-removal calculation. When the fuel injected from the fuel injection valve 31 adheres to the intake passage 26, the amount of fuel supplied to the combustion chamber 25 becomes smaller than the amount of fuel actually injected. On the other hand, when the fuel adhering to the intake passage 26 is carried off into the combustion chamber 25 by an intake air flow, the amount of fuel supplied to the combustion chamber 25 becomes larger than the amount of fuel actually injected. The adhesion-removal calculation is a correction that takes into consideration such influence of fuel adherence and removal. The required injection mass is calculated by the adhesion-removal calculation. Note that, required injection mass = required fuel mass for cylinder x adhesion correction coefficient C x removal correction coefficient D. Specific calculation methods of the correction coefficient C and the removal correction coefficient D will be described later.

After the required injection mass is calculated at step S6, then at step S7, a calculation portion 105 calculates an injection time (hereinafter referred to as an effective injection time) of the fuel injection valve 31 that is necessary to inject the required injection mass of fuel. In other words, the time during which the fuel injection valve 31 is to be opened is calculated. After the effective injection time is calculated, the process proceeds to step S8, and a driving time of the fuel injection valve 31 is calculated by an adder 106 that adds the effective injection time and an ineffective injection time. Note that the ineffective injection time is a time during which fuel is not actually injected although the fuel injection valve 31 is driven.

Next, the process proceeds to step S9, and the fuel injection valve 31 is driven for the driving time calculated in the above-described manner.

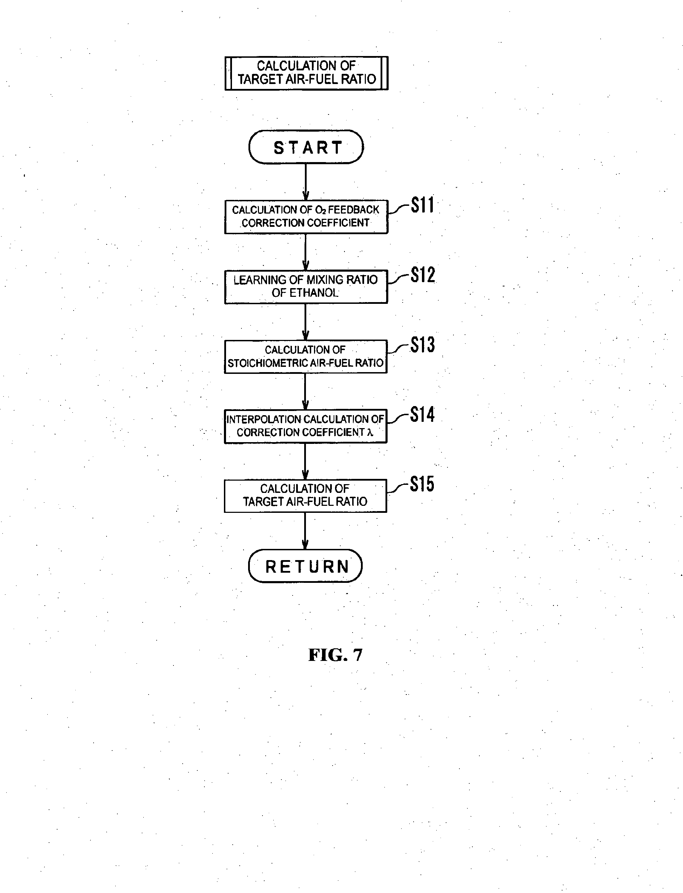

Next, the calculation of the target air-fuel ratio at step S3 will be described, with reference to a flowchart shown in FIG. 7. To calculate the target air-fuel ratio, first, at step S11, the O₂ feed back correction coefficient (also expressed as an O2FB correction coefficient in FIG. 5 etc.) is calculated based on the detection signal from the O₂ sensor 56. Note that, as described above, the O₂ feed back correction coefficient is also used when calculating the required fuel mass for the cylinder (refer to step S5).

The O₂ feed back correction coefficient becomes larger when the air-fuel ratio is on the lean side. Contrarily, it becomes smaller when the air-fuel ratio is on the rich side. In other words, the value of the O₂ feed back correction coefficient becomes larger as the air-fuel ratio becomes larger, and it becomes smaller as the air-fuel ratio becomes smaller.

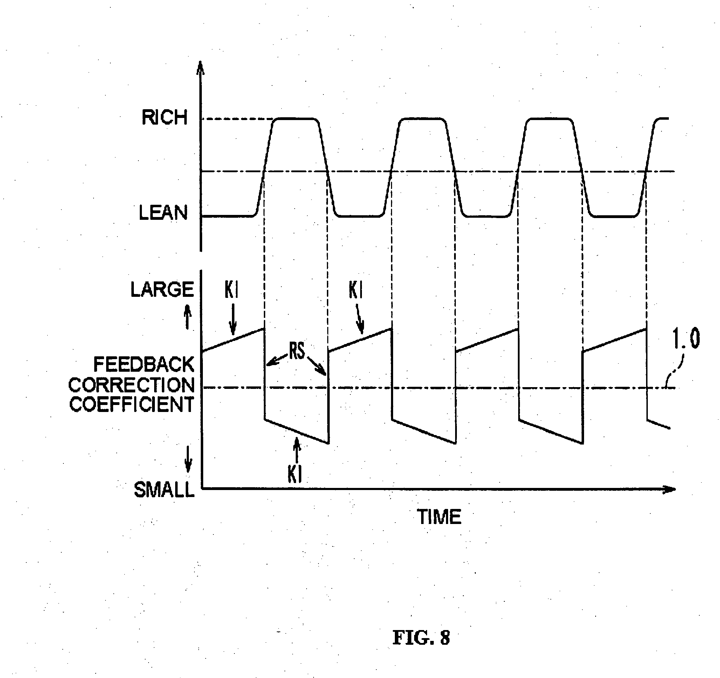

To be more specific, the O₂ feed back correction coefficient FB is obtained by a calculation portion 201 in the following manner. That is, the calculation portion 201 first determines whether the air-fuel ratio is rich or lean (refer to FIG. 8), based on the detection signal from the O₂ sensor 56. Then, if the air-fuel ratio is rich, the calculation portion 201 determines whether or not the air-fuel ratio has been inverted from lean to rich by making a comparison with the previous detection result. When the air-fuel ratio has been inverted from lean to rich, the value FB - RS that is obtained by subtracting a predetermined constant RS (RS is a skip amount) from the current correction coefficient FB is set as a new correction coefficient FB. When the air-fuel ratio has not been inverted from lean to rich, FB - KI (KI is an integral amount, where RS > KI) is set as a new correction coefficient FB. On the other hand, as a result of the above-described determination, if the air-fuel ratio is lean, the calculation portion 201 determines whether or not the air-fuel ratio has been inverted from rich to lean by making a comparison with the previous detection result. When the air-fuel ratio has been inverted from rich to lean, the value FB + RS that is obtained by adding the constant RS to the current correction coefficient FB is set as a new correction coefficient FB. When the air-fuel ratio has not been inverted from rich to lean, FB + KI is set as a new correction coefficient FB.

When the O₂ feed back correction coefficient FB is calculated, the process then proceeds to step S12, and a calculation portion 202 calculates the mixing ratio of ethanol. The calculation of the mixing ratio of ethanol is the estimation of the mixing ratio of ethanol in fuel based on the O₂ feed back correction coefficient FB. In this embodiment, since the estimated value is successively updated by feedback, this estimation is referred to as learning.

In the motorcycle 1 according to this embodiment, gasoline (i.e., the mixing ratio of ethanol is 0%), ethanol (i.e., the mixing ratio of ethanol is 100%), and a blended fuel of gasoline and ethanol (i.e., the mixing ratio of ethanol is more than 0% and less than 100%) can be used as fuel. Accordingly, at the time of refueling, a fuel having a different mixing ratio of ethanol may be supplied. In such a case, the mixing ratio of alcohol after refueling is estimated by the following learning. Note that, from a practical standpoint, the mixing ratio of ethanol in fuel is set between 22% and 100% in the motorcycle 1 of this embodiment. Therefore, in the following description, an explanation will be made assuming that the range of change in the mixing ratio of ethanol is between 22% and 100%. However, it is readily apparent that the lower limit value of the mixing ratio of ethanol may be a value other than 22%.

The learning of the mixing ratio of ethanol is performed by calculating an increase/decrease value ΔE of the mixing ratio from the O₂ feed back correction coefficient FB, and by adding the increase/decrease value ΔE to a previous learning value E. That is, the following equation is established: learning value E of the mixing ratio = previous learning value E + ΔE. Note that ΔE can take either a positive value or a negative value. As shown in FIG. 8, the increase/decrease value ΔE becomes a positive value when the O₂ feed back correction coefficient FB is larger than 1 (that is, in the case of a lean ratio), and it becomes a negative value when the O₂ feed back correction coefficient FB is lower than 1 (that is, in the case of a rich ratio). Therefore, in the case of a lean ratio, the learning value E of the mixing ratio increases, and in the case of a rich ratio, the learning value E of the mixing ratio decreases. Note that the learning value E converges to a certain value (i.e., an actual ethanol mixing ratio) by repeating the learning.

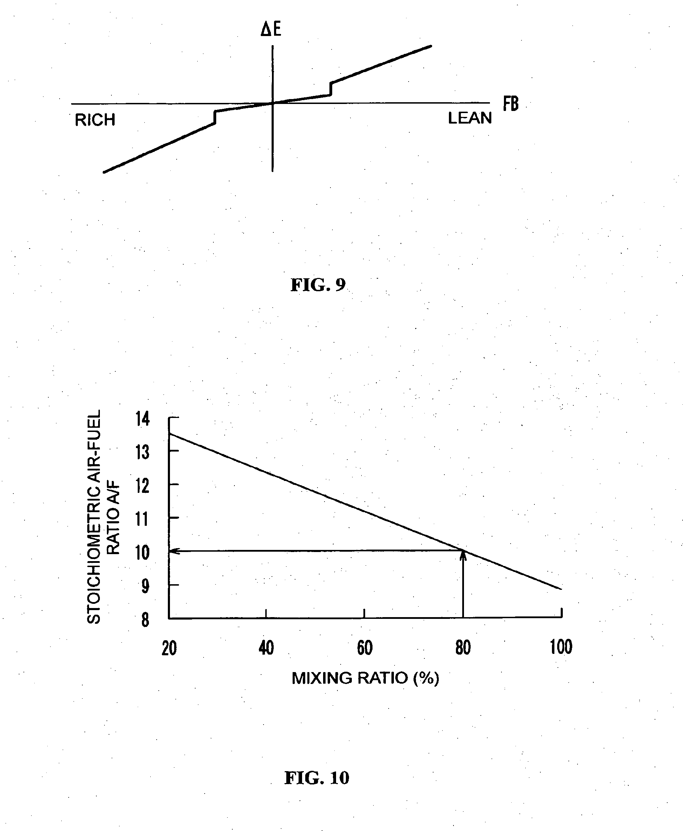

Next, the process proceeds to step S13, and a calculation portion 203 calculates the stoichiometric air-fuel ratio based on the learning value E of the mixing ratio of ethanol. The relationship between the mixing ratio of ethanol and the stoichiometric air-fuel ratio (refer to FIG. 9) is stored in the storage unit 42 of the ECU 40. The calculation portion 203 refers to the aforementioned relationship, and calculates the stoichiometric air-fuel ratio corresponding to the learning value E of the mixing ratio of ethanol.

Note that, although the stoichiometric air-fuel ratio may be used as the target air-fuel ratio, if correction is performed in accordance with an engine temperature, more favorable control can be performed. For example, when driving a vehicle off immediately after a cold start, a good driving performance can be obtained by setting the target air-fuel ratio to be smaller than the stoichiometric air-fuel ratio (i.e., making the target air-fuel ratio rich). In view of this, in this embodiment, a correction coefficient λ that corresponds to the mixing ratio of ethanol and the engine temperature is implemented, and the target air-fuel ratio is set as follows: target air-fuel ratio = stoichiometric air-fuel ratio x λ. Next, a method of calculating the correction coefficient λ, which is carried out at step S14, will be described.

The storage unit 42 stores λ_{E22,T1} (expressed as "target λ low temperature (E22)" in FIG. 5 etc.) that is a value of the correction coefficient λ when the mixing ratio of ethanol is 22% and the engine temperature is a predetermined temperature T1, λ_{E22,T2} (expressed as "target λ high temperature (E22)" in FIG. 5 etc.) that is a value of the correction coefficient λ when the mixing ratio of ethanol is 22% and the engine temperature is a predetermined temperature T2 (note that T2 > T1), λ_{E100,T1} (expressed as "target λ low temperature (E100)" in FIG. 5 etc.) that is a value of the correction coefficient λ when the mixing ratio of ethanol is 100% and the engine temperature is the predetermined temperature T1, and λ_{E100,T2} (expressed as "target λ high temperature (E100)" in FIG. 5 etc.) that is a value of the correction coefficient λ when the mixing ratio of ethanol is 100% and the engine temperature is the predetermined temperature T2.

Then, a reflection coefficient calculation portion 300 obtains a correction coefficient λ_{E}, _{T} corresponding to a learned ethanol mixing ratio E and a detected engine temperature T by interpolation calculation, based on the above-described correction coefficients λ_{E22,T1}, λ_{E22,T2}, λ_{E100,T1}, and λ_{E100,T2}. Note that there is no limitation on a specific method for the interpolation calculation.

In this embodiment, first, a first calculation portion 301 of the reflection coefficient calculation portion 300 calculates, from λ_{E22,T1}, and λ_{E22,T2}, a correction coefficient λ_{E22,T} used when the mixing ratio of ethanol is 22% and the engine temperature is T. For example, when a linear interpolation calculation is performed as the interpolation calculation, using the engine temperature as an input parameter and the correction coefficient as a target parameter, the correction coefficient λ_{E22,T} is calculated as follows: λ_{E22,T} = λ_{E22,T1} x (1-R) + λ_{E22,T2} x R, where the reflection coefficient R = (T - T1)/(T2 - T1).

In a similar manner, a second calculation portion 302 calculates, from λ_{E100,T1} and λ_{E100,T2}, a correction coefficient λ_{E100,T} used when the mixing ratio of ethanol is 100% and the engine temperature is T. For example, when a linear interpolation calculation is performed, using the engine temperature as an input parameter and the correction coefficient as a target parameter, the correction coefficient λ_{E100,T} is calculated as follows: λ_{E100,T} = λ_{E100,T1} x (1-R) + λ_{E100,T2} x R, where the reflection coefficient R = (T - T1)/(T2 - T1).

Then, a third calculation portion 303 calculates, from λ_{E22,T} and λ_{E100,T}, a correction coefficient λ_{E,T}. For example, when a linear interpolation calculation is performed, using the mixing ratio of ethanol as an input parameter and the correction coefficient as a target parameter, the correction coefficient λ_{E,T} is calculated as follows: λ_{E,T} = λ_{E22,T} x (1-R) + λ_{E100,T} x R, where the reflection coefficient R = (E - E22)/(E100 - E22).

After the correction coefficient λ_{E,T} is calculated in this manner, the process proceeds to step S15, and the target air-fuel ratio is calculated by a multiplier 204. More specifically, the target air-fuel ratio is calculated as follows: target air-fuel ratio = stoichiometric air-fuel ratio x correction coefficient λ_{E,T}.

As described above, the adhesion correction coefficient C and the removal correction coefficient D are used in the adhesion-removal calculation at step S6 (refer to FIG. 6). A calculation method of the adhesion correction coefficient C and the removal correction coefficient D will now be described. Note that the calculation method of the adhesion correction coefficient C and the removal correction coefficient D is substantially the same as the above-described calculation method of the correction coefficient λ_{E,T}.

The storage unit 42 of the ECU 40 stores an adhesion correction coefficient C_{E22,T1} used when the mixing ratio of ethanol is 22% and the engine temperature is a predetermined temperature T1, an adhesion correction coefficient C_{E22,T2} used when the mixing ratio of ethanol is 22% and the engine temperature is a predetermined temperature T2 (note that T2 > T1), an adhesion correction coefficient C_{E100,T1} used when the mixing ratio of ethanol is 100% and the engine temperature is the predetermined temperature T1, and an adhesion correction coefficient C_{E100,T2} used when the mixing ratio of ethanol is 100% and the engine temperature is the predetermined temperature T2.

A reflection coefficient calculation portion 401 obtains an adhesion correction coefficient C_{E,T} corresponding to the learned ethanol mixing ratio E and the detected engine temperature T by interpolation calculation, based on the above-described correction coefficients C_{E22,T1}, C_{E22,T2}, C_{E100,T1}, and C_{E100,T2}. Note that a specific method for the interpolation calculation is similar to that described above. More specifically, first, an adhesion correction coefficient C_{E22,T} used when the mixing ratio of ethanol is 22% and the engine temperature is T is calculated from C_{E22,T1} and C_{E22,T2} by interpolation calculation. Then, an adhesion correction coefficient C_{E100,T} used when the mixing ratio of ethanol is 100% and the engine temperature is T is calculated from C_{E100,T1} and C_{E100,T2} by interpolation calculation. Lastly, an adhesion correction coefficient C_{E,T} used when the mixing ratio of ethanol is E% and the engine temperature is T is calculated from the aforementioned C_{E22,T} and C_{E100,T} by interpolation calculation. Then, the final adhesion correction coefficient C is calculated by a multiplier 403 that multiplies a predetermined basic adhesion rate that has been set in advance with the aforementioned adhesion correction coefficient C_{E,T}.

Further, the storage unit 42 of the ECU 40 stores a removal correction coefficient D_{E22,T1} used when the mixing ratio of ethanol is 22% and the engine temperature is the predetermined temperature T1, a removal correction coefficient D_{E22,T2} used when the mixing ratio of ethanol is 22% and the engine temperature is the predetermined temperature T2 (note that T2 > T1), a removal correction coefficient D_{E100,T1} used when the mixing ratio of ethanol is 100% and the engine temperature is the predetermined temperature T1, and a removal correction coefficient D_{E100,T2} used when the mixing ratio of ethanol is 100% and the engine temperature is the predetermined temperature T2.

A reflection coefficient calculation portion 402 obtains a removal correction coefficient D_{E,T} corresponding to the learned ethanol mixing ratio E and the detected engine temperature T by interpolation calculation, based on the above-described correction coefficients D_{E22,T1}, D_{E22,T2}, D_{E100,T1}, and D_{E100,T2}. Note that a specific method for the interpolation calculation is similar to that described above. Then, the final removal correction coefficient D is calculated by a multiplier 404 that multiplies a predetermined basic removal rate that has been set in advance with the aforementioned removal correction coefficient D_{E,T}.

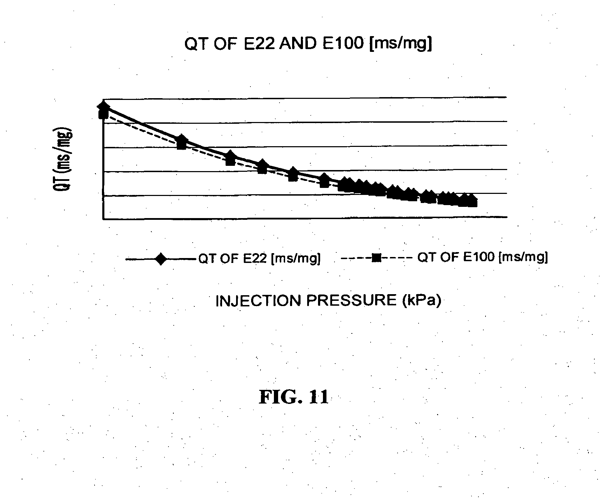

Next, the calculation of the effective injection time of the fuel injection valve 31 at step S7 (refer to FIG. 6) will be described. The storage unit 42 of the ECU 40 stores a QT property when the mixing ratio of ethanol is 22%, and a QT property when the mixing ratio of ethanol is 100%. Here, QT is defined as the injection time divided by the injection mass. More specifically, QT is defined as an effective injection time of the fuel injection valve that is necessary to inject fuel per unit mass. The QT property is a change in QT in response to a change in injection pressure. FIG. 11 is an example diagram that shows the QT property (hereinafter referred to as the QT property diagram), where the horizontal axis represents the injection pressure, and the vertical axis represents QT.

A reflection coefficient calculation portion 501 shown in FIG. 5 obtains QT_{E} corresponding to the learned ethanol mixing ratio E by interpolation calculation, from QT_{E22} when the mixing ratio of ethanol is 22% and QT_{E100} when the mixing ratio of ethanol is 100%. More specifically, first, the QT property shown in FIG. 11 is used to calculate QT_{E22} and QT_{E100} corresponding to the fuel injection pressure of the fuel injection valve 31. Next, QT_{E} is obtained by interpolation calculation based on the calculated QT_{E22} and QT_{E100} values.

When the QT_{E} is calculated in the above manner, the effective injection time of the fuel injection valve 31 is calculated by the calculation portion 105 that multiplies the required injection mass by QT_{E}.

The storage unit 42 of the ECU 40 stores an ineffective injection time property when the mixing ratio of ethanol is 22%, and an ineffective injection time property when the mixing ratio of ethanol is 100%. A reflection coefficient calculation portion 502 obtains an ineffective injection time corresponding to the learned ethanol mixing ratio E by interpolation calculation, from an ineffective injection time when the mixing ratio of ethanol is 22% and an ineffective injection time when the mixing ratio of ethanol is 100%.

When the ineffective injection time corresponding to the ethanol mixing ratio E is calculated, the driving time of the fuel injection valve 31 is calculated by the adder 106 that adds the effective injection time and the ineffective injection time, as described above.

As described above, according to this embodiment, the mixing ratio of ethanol is learned in the calculation portion 202. Therefore, a sensor to directly detect the ethanol concentration is not required. Here, because the mixing ratio of ethanol is learned, the reliability of the control before the learning value is ascertained is lower than that after the learning value is ascertained. However, according to this embodiment, until the learning of the mixing ratio of ethanol is completed, the igniter 30 is ignited at the most retarded ignition timing among optimum ignition timings within the estimated range of mixing ratios of ethanol. As a result, the ECU 40 controls the igniter 30 to be ignited at an ignition timing that is retarded from the optimum ignition timing based on the actual mixing ratio, unless the actual mixing ratio of ethanol is a mixing ratio that has an ignition property on the most retarded side. In addition, the ECU 40 controls the igniter 30 to be ignited at an ignition timing that is retarded from the optimum ignition timing based on the mixing ratio before refueling, unless the mixing ratio of ethanol recorded in the storage unit 42 is a mixing ratio that has the ignition property on the most retarded side. Thus, it is possible to suppress occurrence of knocking before the learning value is ascertained.

Note that, in known art in which the mixing ratio of ethanol is directly detected by a sensor, the ignition control in accordance with the actual mixing ratio of ethanol can be started based on the sensor output. However, in the case where the mixing ratio of ethanol is learned (estimated, in other words), as in this embodiment, known art does not indicate how to start the ignition control in accordance with the actual mixing ratio of ethanol. However, in this embodiment, in response to the convergence of the learning value, it is assumed that the learning value coincides with the actual mixing ratio of ethanol and the learning value is ascertained. After that, the ignition control based on the learning value (that is, the ignition control in accordance with the actual mixing ratio of ethanol) is performed. Therefore, a transition from the start-up control to the O₂ feedback control for the purpose of suppressing knocking can be performed effectively and smoothly.

Although in this embodiment it is determined whether or not the learning value has converged, it is also possible to determine that the learning value has been ascertained based on the elapsed time from the start of the learning. Empirically, it is found that a certain time is required for the convergence of the learning value, but once the certain time has elapsed, the learning value does not significantly change afterward. Therefore, it is also possible to ascertain the learning value after a predetermined time has elapsed from the start of the learning. Also in this case, the above-described effect can be obtained.

In addition, according to this embodiment, even before the learning value is ascertained, until the fuel in the fuel pipe 35 has been consumed, the ignition control is performed based on the mixing ratio of ethanol before refueling. Therefore, until the fuel in the fuel pipe 35 has been consumed, the control to retard the ignition timing is not unnecessarily performed.

In addition, in this embodiment, until the learning of the mixing ratio of ethanol is completed, the fuel injection valve 31 is controlled based on the lowest target air-fuel ratio (in other words, the richest target air-fuel ratio) among the target air-fuel ratios within the estimated range of mixing ratios of ethanol. As a result, the ECU 40 controls the fuel injection valve 31 using, as a target air-fuel ratio, an air-fuel ratio that is smaller than the target air-fuel ratio based on the actual mixing ratio, unless the actual mixing ratio of ethanol is a mixing ratio that makes the lowest target air-fuel ratio. Further, the ECU 40 controls the fuel injection valve 31 using, as a target air-fuel ratio, an air-fuel ratio that is smaller than the target air-fuel ratio based on the mixing ratio before refueling, unless the mixing ratio of ethanol recorded in the storage unit 42 is the mixing ratio that makes the lowest target air-fuel ratio. Thus, it is possible to suppress occurrence of knocking before the learning value is ascertained.

In addition, according to this embodiment, even before the learning value is ascertained, until the fuel in the fuel pipe 35 has been consumed, the fuel injection valve 31 is controlled based on the mixing ratio of ethanol before refueling. Therefore, until the fuel in the fuel pipe 35 has been consumed, the control to make the air-fuel ratio rich is not unnecessarily performed. Accordingly, excessive fuel supply can be inhibited, and a reduction in fuel consumption before the ascertaining of the learning value can be facilitated. In addition, discharge of dirty exhaust gas can be suppressed.

### Second Embodiment

In the first embodiment, the lower limit value and the upper limit value of the mixing ratio of ethanol that is supplied to the motorcycle 1 are determined in advance. Accordingly, in the start-up control, the estimated range of the mixing ratio of ethanol is set as the overall range between the lower limit value and the upper limit value. More specifically, because the lower limit value and the upper limit value of the mixing ratio of ethanol in the supplied fuel are respectively 22% and 100%, the estimated range of the mixing ratio of ethanol is set between 22% and 100%.

However, there is a case in which fuel remains in the fuel tank 2 at the time of refueling. In such a case, depending on the amount of the remaining fuel and the amount of the newly supplied fuel, there is a case in which there is no possibility of the mixing ratio of ethanol reaching the above-described lower limit value or upper limit value, in a fuel in the fuel tank 2 after refueling, namely, a fuel that is a mixture of the fuel remaining before refueling and the supplied new fuel. For example, it is assumed that E100 fuel remains in the fuel tank 2 before refueling, and a new fuel of the same amount as the remaining fuel is supplied. In this case, even if the new fuel is E22 fuel, the mixing ratio of ethanol in the fuel after mixing is calculated as (100% + 22%) / 2 = 61%, namely, the mixing ratio of ethanol is not smaller than 61%.

In light of the above, in this embodiment, the range of change of the mixing ratio of ethanol is estimated based on the learning value of the mixing ratio of ethanol in a fuel before refueling, the amount of the fuel in the fuel tank 2 before refueling, and the amount of a fuel in the fuel tank 2 after refueling. Then, within the estimated range, the optimum ignition timing is retarded (refer to step S107 in FIG. 4) and the air-fuel ratio is minimized (refer to step S109).

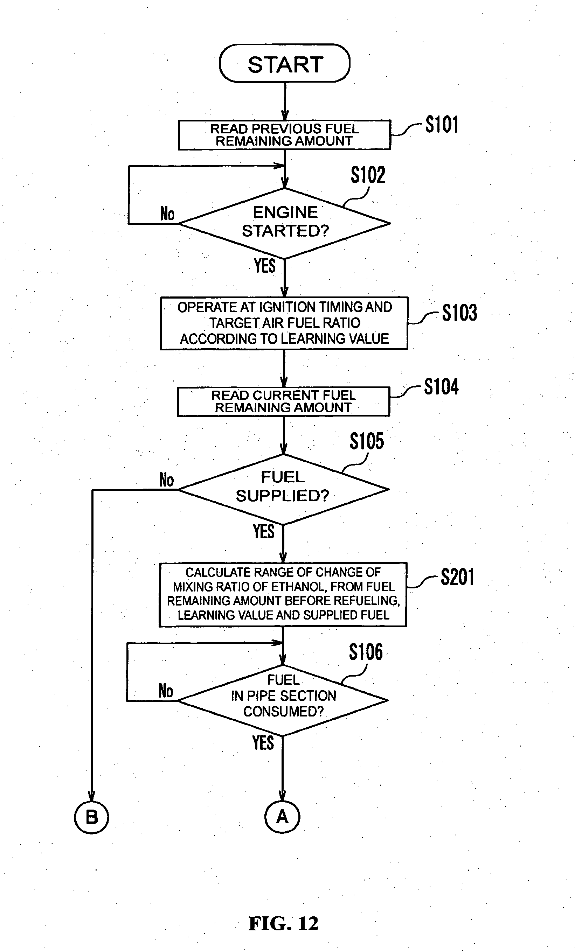

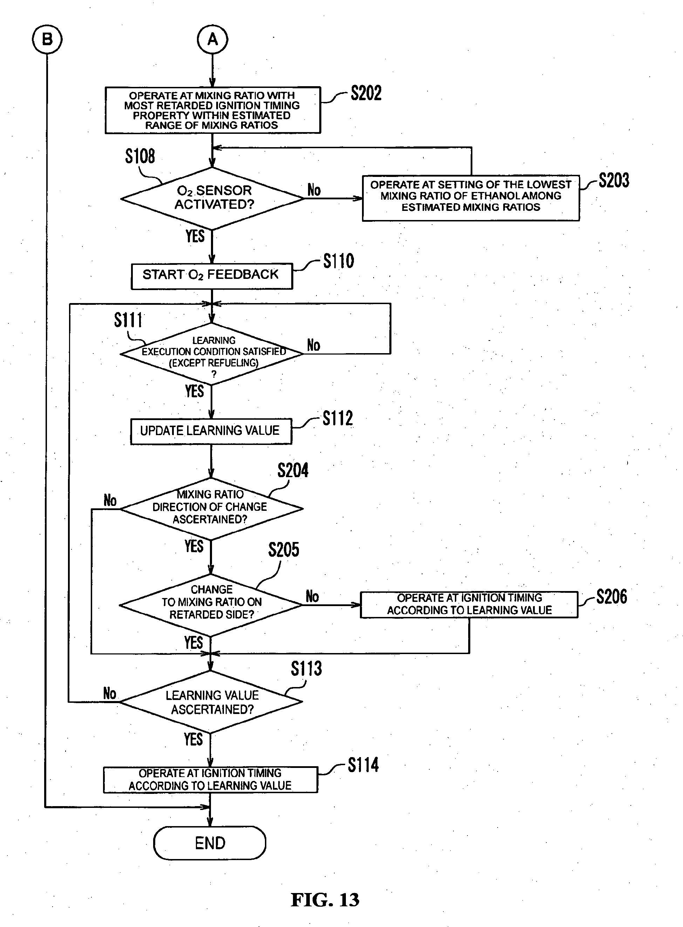

FIG. 12 and FIG. 13 show a flowchart according to a second embodiment. In the following description, steps that are similar to those in the first embodiment are denoted by the same reference numerals and the description thereof will be omitted.

In this embodiment, when it is determined at step S105 that fuel has been supplied, the process proceeds to step S201. At step S201, the calculation unit 41 of the ECU 40 reads from the storage unit 42 the learning value of the mixing ratio of ethanol in a fuel before refueling, and the amount of the fuel in the fuel tank 2 before refueling (refer to step S101). In addition, the calculation unit 41 obtains the amount of a fuel in the fuel tank 2 after refueling from the fuel sensor 57. Then, the calculation unit 41 estimates the range of change of the mixing ratio of ethanol based on these pieces of information.

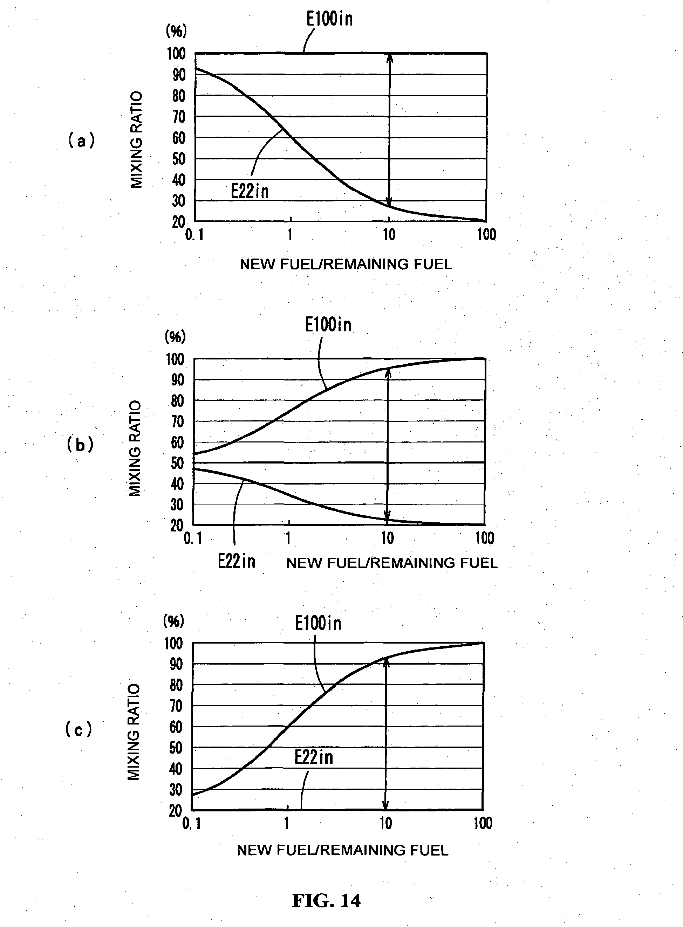

FIG. 14(a) to FIG. 14(c) are diagrams each showing a change pattern of the mixing ratio of ethanol in a fuel after refueling. The horizontal axis in each figure represents the mass ratio (new fuel/remaining fuel), and the vertical axis represents the mixing ratio (%) of ethanol. FIG. 14 (a) shows a change pattern in a case where E100 fuel is remaining in the fuel tank 2 before refueling, in other words, in a case where the learning value of the mixing ratio of ethanol before refueling is 100%. FIG. 14 (b) shows a change pattern in a case where E50 fuel is remaining in the fuel tank 2 before refueling, in other words, in a case where the learning value of the mixing ratio of ethanol before refueling is 50%. FIG. 14(c) shows a change pattern in a case where E22 fuel is remaining in the fuel tank 2 before refueling, in other words, in a case where the learning value of the mixing ratio of ethanol before refueling is 22%.

As shown in FIG. 14(a), in the case where E100 fuel is remaining in the fuel tank 2 before refueling, if E100 fuel is supplied, irrespective of the mass ratio (new fuel/remaining fuel), the mixing ratio of ethanol after refueling becomes 100% (refer to the straight line E100ᵢₙ) . On the other hand, when E22 fuel is supplied, the mixing ratio of ethanol changes in accordance with the above-described mass ratio (refer to the curve E22ᵢₙ). As a result, the range of change of the mixing ratio of ethanol after refueling is shown as the range between the straight line E100ᵢₙ and the curve E22ᵢₙ. For example, when new fuel/remaining fuel = 10, the range of change is the range shown by the arrow. This range of change is a narrower range than the overall range between the lower limit value 22% and the upper limit value 100% of the mixing ratio of ethanol.

In a similar manner, as shown in FIG. 14(b), in the case where E50 fuel is remaining in the fuel tank 2 before refueling, if E100 fuel is supplied, the mixing ratio of ethanol after refueling is changed as shown by the curve E100ᵢₙ. When E22 fuel is supplied, the mixing ratio of ethanol is changed as shown by the curve E22ᵢₙ. As a result, the range of change of the mixing ratio of ethanol after refueling is shown as the range between the curve E100ᵢₙ and the curve E22ᵢₙ. The same applies to FIG. 14(c).

In this manner, the calculation unit 41 estimates the range of change of the mixing ratio of ethanol after refueling. After the calculation unit 41 estimates the range of change of the mixing ratio of ethanol at step S201, the process proceeds to step S106. Note that, when executing step S201, the ECU 40 functions as fuel amount ratio calculating means and changeable range calculating means.

When it is determined at step S106 that the fuel in the fuel pipe 35 has been consumed, the process proceeds to step S202, and the igniter 30 is ignited at the most retarded optimum ignition timing among the optimum ignition timings based on the mixing ratio of ethanol within the estimated range of change. After the processing at step S202, the process proceeds to step S108.

When it is determined at step S108 that the O₂ sensor 56 has not been activated, the process proceeds to step S203, and the fuel injection valve 31 is controlled so that the target air-fuel ratio becomes the lowest air-fuel ratio among the target air-fuel ratios based on the mixing ratio of ethanol within the estimated range of change. This control continues until the O₂ sensor 56 is activated.

In the first embodiment, the retardation of the optimum ignition timing is continued until the learning value of the mixing ratio of ethanol is ascertained. On the other hand, in this embodiment, even before the ascertaining of the learning value, there is a case in which the retardation of the optimum ignition timing is ended depending on a direction of change of the learning value. More specifically, in this embodiment, after the start of the learning at step S112, it is determined at step S204 whether or not the direction of change of the learning value is ascertained. Here, the direction of change of the learning value indicates a direction in which the mixing ratio of ethanol increases or decreases. Whether or not the direction of change of the learning value is ascertained can be determined based on, for example, whether or not the updating of the learning value is successively performed a predetermined number of times without any change to the direction of change, whether or not a time period during which the direction of change is unchanged continues for a predetermined period of time, or the like.

When it is determined at step S204 that the direction of change of the learning value is ascertained, the process proceeds to step S205. On the other hand, when it is determined that the change direction of the learning value is not ascertained, the process proceeds to step S113. At step S205, it is determined whether or not the direction of change of the learning value is a direction in which the optimum ignition timing is changed to the retarded side. When the determination result at step S205 is YES, there is a high possibility that the optimum ignition timing will be changed further to the retarded side. Accordingly, in order to inhibit knocking from occurring, the above-described retardation (that is, ignition at the most retarded optimum ignition timing within the estimated range of change) is continued. When the determination result at step S205 is YES, the process proceeds to step S113.

On the other hand, when the determination result at step S205 is NO, the optimum ignition timing has changed to the advanced side from the optimum ignition timing based on the current learning value. Accordingly, even if the optimum ignition timing based on the current learning value is adopted, there is only a small possibility of causing knocking. Thus, the above-described retardation of the optimum ignition timing is halted, and the igniter 30 is ignited at the optimum ignition timing according to the learning value. After that, the process proceeds to step S113.

As described above, according to this embodiment, the direction of change of the learning value of the mixing ratio of ethanol is taken into consideration. When the learning value changes to retard the optimum ignition timing, the igniter 30 is ignited at an ignition timing that is retarded from the optimum ignition timing based on the actual mixing ratio. When the learning value changes to advance the optimum ignition timing, it is assumed that knocking will not occur even if the optimum ignition timing is not retarded, and the igniter 30 is ignited at the optimum ignition timing based on the learning value. In this manner, in a case where there is a possibility of occurrence of knocking if the igniter 30 is ignited based on the learning value, the ignition timing is retarded. Therefore, knocking can be suppressed. On the other hand, when there is no possibility of occurrence of knocking even if the igniter 30 is ignited based on the learning value, the ignition timing is controlled based on the learning value. Therefore, the retardation of the ignition timing is not unnecessarily performed.

Further, according to this embodiment, the changeable range of the mixing ratio of ethanol is estimated based on the learning value before refueling and the amount of fuel before and after refueling, and the retardation of the ignition timing is performed within that range. Therefore, the range in which the ignition timing is retarded can be made narrower than in the first embodiment, thus avoiding unnecessary retardation.

Moreover, according to this embodiment, the changeable range of the mixing ratio of ethanol is estimated based on the learning value before refueling and the amount of fuel before and after refueling, and the fuel injection valve 31 is controlled so that the air-fuel ratio is made rich within that range. Therefore, the range in which the air-fuel ratio is made rich can be made narrower than in the first embodiment, thus avoiding unnecessary fuel injection. As a result, reduction in fuel consumption before the ascertaining of the learning value can be more facilitated.

In the above-described embodiments, alcohol contained in the fuel used for the engine 4 is ethanol. However, the alcohol contained in the fuel is not limited to ethanol, and may be another alcohol such as methanol.

Note that the control of the igniter 30 and the control of the fuel injection valve 31 in the above-described embodiments may be independently performed. For example, only the control of the igniter 30 may be performed, or only the control of the fuel injection valve 31 may be performed. When only the control of the igniter 30 is performed, the fuel supply device is not limited to the fuel injection valve 31, and may be another device such as a carburetor.

### Definition of the terms in the specification

In the specification, the "refueling detection means" may be any means as long as it can detect the presence or absence of refueling. The refueling detection means may be means for detecting the presence or absence of refueling based on a change in the amount of fuel. That is, it may be a sensor that detects the amount of fuel. Alternatively, the refueling detection means may be means for detecting the presence or absence of refueling based on the opening and closing of a cap of the fuel tank. That is, it may be a sensor that detects the opening and closing of the cap of the fuel tank. Furthermore, a switch that is operated by a user at the time of refueling may be provided, and refueling may be detected based on the presence or absence of the input of the switch.

The "air-fuel ratio sensor" may be a sensor that detects the air-fuel ratio itself. Alternatively, it may be a sensor that detects a parameter (for example, a presence or absence of oxygen, an oxygen concentration etc.) that is necessary to calculate the air-fuel ratio.

The invention is applicable to a control device for an internal combustion engine and a straddle-type vehicle including the control device.

### Description of the Reference Numerals and Signs

- 1: Motorcycle (Straddle-type vehicle)
- 2: Fuel tank
- 4: Engine (Internal combustion engine)
- 26: Intake passage
- 27: Exhaust passage
- 30: Igniter
- 31: Fuel injection valve (Fuel supply device)
- 35: Fuel pipe
- 40: ECU (Ignition control unit, injection control unit)
- 42: Storage unit (Mixing ratio storage means)
- 56: O₂ sensor (Air-fuel ratio sensor)
- 57: Fuel sensor (Refueling detection means, fuel amount detection means)

## Claims

1. A control device for an internal combustion engine (4) having a fuel tank (2) and an igniter (30), and that is capable of using at least one or a blended combination of gasoline and alcohol as fuel, the control device comprising:
refueling detection means (57) for detecting refueling of the fuel tank (2); and
an ignition control unit (40) comprising:
mixing ratio estimating means for estimating a mixing ratio of alcohol contained in fuel based on an operation state of the internal combustion engine (4);
mixing ratio storage means (42) for recording the mixing ratio estimated by the mixing ratio estimating means;
estimation completion determining means for determining whether estimation is completed by the mixing ratio estimating means; and
ignition control means for igniting the igniter (30) at an ignition timing that is retarded from an optimum ignition timing based on a mixing ratio before refuelling, during a predetermined period until the estimation completion determining means determines that the estimation is completed after the refueling detection means (57) has detected refueling.

2. The control device according to claim 1, further comprising an air-fuel ratio sensor (56) adapted to be provided in an exhaust passage (27) of an associated engine (4).

3. The control device according to claim 2, wherein the ignition control unit (40) includes activation determining means for determining whether the air-fuel ratio sensor (56) is activated.

4. The control device according to claim 3, wherein the mixing ratio estimating means is means for estimating the mixing ratio of alcohol based on a detection value of the air-fuel ratio sensor (56), and starts estimation of the mixing ratio of alcohol after the activation determining means determines that the air-fuel ratio sensor (56) is activated.

5. The control device according to claim 4, wherein the estimation completion determining means determines that the estimation is completed after a predetermined time has elapsed from when the mixing ratio estimating means starts the estimation.

6. The control device according to claim 4 or 5, wherein the estimation completion determining means determines that the estimation is completed when the value of the mixing ratio estimated by the mixing ratio estimating means converges.

7. The control device according to any preceding claim, adapted for use with an internal combustion engine (4) including a fuel supply device (31) that supplies fuel and a fuel supply pipe (35) that connects the fuel tank (2) and the fuel supply device (31), wherein the ignition control unit further includes:
fuel consumption determining means for determining, after the refueling detection means (57) detects refueling, whether fuel present in the fuel pipe (35) before the refueling has been consumed.

8. The control device according to claim 7, wherein in a case where the refueling detecting means (57) detects refueling:
until the fuel consumption determining means determines that the fuel in the fuel pipe (35) has been consumed, the ignition control means (40) ignites the igniter (30) based on a mixing ratio before the refueling that is recorded in the mixing ratio storage means (42);
and
after the fuel consumption determining means determines that the fuel in the fuel pipe (35) has been consumed, until the estimation completion determining means determines that the estimation is completed, the ignition control means (40) ignites the igniter (30) at an ignition timing that is retarded from an optimum ignition timing based a mixing ratio before the refueling that is recorded in the mixing ratio storage means (42).

9. The control device according to claim 4, wherein the fuel supply device (31) is a fuel injection valve, and the control device further comprises an injection control unit (40) that controls an injection amount of the fuel injection valve (31) so as to achieve a predetermined target air-fuel ratio.

10. The control device according to claim 4, wherein in a case where refueling is detected by the refueling detection means (57):
before the activation determining means determines that the air-fuel ratio sensor (56) is activated, and before the fuel consumption determining means determines that the fuel in the fuel pipe (35) has been consumed, the injection control unit (40) sets a target air-fuel ratio based on a stoichiometric air-fuel ratio of the mixing ratio before refueling recorded in the mixing ratio storage means (42);
before the activation determining means determines that the air-fuel ratio sensor (56) is activated, and after the fuel consumption determining means determines that the fuel in the fuel pipe (35) has been consumed, the injection control unit (40) sets as, a target air-fuel ratio, an air-fuel ratio that is smaller than the target air-fuel ratio based on a stoichiometric air-fuel ratio of a mixing ratio before the refueling that is recorded in the mixing ratio storage means (42); and
after the activation determining means determines that the air-fuel ratio sensor (56) is activated, and after the fuel consumption determining means determines that the fuel in the fuel pipe (35) has been consumed, the injection control unit (40) sets a target air-fuel ratio based on a stoichiometric air-fuel ratio of the mixing ratio estimated by the mixing ratio estimating means.

11. A straddle-type vehicle (1) comprising a control device according to any one of claims 1 to 10.

12. A method of controlling an engine (4), said method comprising the steps of:
estimating a mixing ratio of alcohol contained in a fuel based on an operation state of the internal combustion engine (4);
determining whether estimation is completed; and
igniting an igniter (30) at an ignition timing that is retarded from an optimum ignition timing based on an actual mixing ratio, during a predetermined period until it has been determined that the estimation is completed.

## Patentansprüche

1. Steuereinrichtung für eine Verbrennungskraftmaschine (4), die einen Kraftstofftank (2) und eine Zündvorrichtung (30) hat und die dazu in der Lage ist, wenigstens eines von Benzin und Alkohol oder eine gemischte Kombination derselben als Kraftstoff zu verwenden, wobei die Steuereinrichtung Folgendes umfasst:
Betankungserkennungsmittel (57) zum Erkennen eines Betankens des Kraftstofftanks (2) und
eine Zündungssteuereinheit (40), die Folgendes umfasst:
Mischungsverhältnis-Abschätzungsmittel zum Abschätzen eines Mischungsverhältnisses des in dem Kraftstoff enthaltenen Alkohols auf der Grundlage eines Betriebszustandes der Verbrennungskraftmaschine (4),
Mischungsverhältnis-Speichermittel (42) zum Aufzeichnen des durch die Mischungsverhältnis-Abschätzungsmittel abgeschätzten Mischungsverhältnisses,
Abschätzungsabschluss-Feststellungsmittel zum Feststellen, ob die Abschätzung durch die Mischungsverhältnis-Abschätzungsmittel abgeschlossen ist, und
Zündungssteuerungsmittel zum Zünden der Zündvorrichtung (30) zu einem Zündzeitpunkt, der gegenüber einem optimalen Zündzeitpunkt auf der Grundlage eines Mischungsverhältnisses vor dem Betanken verzögert ist, während eines vorbestimmten Zeitraums, bis die Abschätzungsabschluss-Feststellungsmittel feststellen, dass die Abschätzung abgeschlossen ist, nachdem die Betankungserkennungsmittel (57) ein Betanken erkannt haben.

2. Steuereinrichtung nach Anspruch 1, die ferner einen Luft-Kraftstoff-Verhältnis-Sensor (56) umfasst, der dafür eingerichtet ist, in einem Abgasdurchgang (27) einer zugeordneten Verbrennungskraftmaschine (4) bereitgestellt zu werden.

3. Steuereinrichtung nach Anspruch 2, wobei die Zündungssteuereinheit (40) Aktivierungsfeststellungsmittel zum Feststellen, ob der Luft-Kraftstoff-Verhältnis-Sensor (56) aktiviert ist, einschließt.

4. Steuereinrichtung nach Anspruch 3, wobei die Mischungsverhältnis-Abschätzungsmittel Mittel zum Abschätzen des Mischungsverhältnisses von Alkohol auf der Grundlage eines Erfassungswertes des Luft-Kraftstoff-Verhältnis-Sensors (56) sind und die Abschätzung des Mischungsverhältnisses von Alkohol beginnen, nachdem die Aktivierungsfeststellungsmittel feststellen, dass der Luft-Kraftstoff-Verhältnis-Sensor (56) aktiviert ist.

5. Steuereinrichtung nach Anspruch 4, wobei die Abschätzungsabschluss-Feststellungsmittel feststellen, dass die Abschätzung abgeschlossen ist, nachdem eine vorbestimmte Zeit verstrichen ist, seitdem die Mischungsverhältnis-Abschätzungsmittel die Abschätzung beginnen.

6. Steuereinrichtung nach Anspruch 4 oder 5, wobei die Abschätzungsabschluss-Feststellungsmittel feststellen, dass die Abschätzung abgeschlossen ist, wenn der Wert des durch die Mischungsverhältnis-Abschätzungsmittel abgeschätzten Mischungsverhältnisses konvergiert.

7. Steuereinrichtung nach einem der vorhergehenden Ansprüche, eingerichtet zur Verwendung mit einer Verbrennungskraftmaschine (4), die eine Kraftstoffzufuhreinrichtung (31), die Kraftstoff zuführt, und ein Kraftstoffzufuhrrohr (35), das den Kraftstofftank (2) und die Kraftstoffzufuhreinrichtung (31) verbindet, einschließt, wobei die Zündungssteuereinheit ferner Folgendes einschließt:
Kraftstoffverbrauch-Feststellungsmittel zum Feststellen, nachdem die Betankungserkennungsmittel (57) ein Betanken erkennen, ob der in dem Kraftstoffrohr (35) vor dem Betanken vorhandene Kraftstoff verbraucht worden ist.

8. Steuereinrichtung nach Anspruch 7, wobei in einem Fall, in dem die Betankungserkennungsmittel (57) ein Betanken erkennen,
bis die Kraftstoffverbrauch-Feststellungsmittel feststellen, dass der Kraftstoff in dem Kraftstoffrohr (35) verbraucht worden ist, die Zündungssteuerungsmittel (40) die Zündvorrichtung (30) auf der Grundlage eines Mischungsverhältnisses vor dem Betanken, das in den Mischungsverhältnis-Speichermitteln (42) gespeichert ist, zünden, und
nachdem die Kraftstoffverbrauch-Feststellungsmittel feststellen, dass der Kraftstoff in dem Kraftstoffrohr (35) verbraucht worden ist, bis die Abschätzungsabschluss-Feststellungsmittel feststellen, dass die Abschätzung abgeschlossen ist, die Zündungssteuerungsmittel (40) die Zündvorrichtung (30) zu einem Zündzeitpunkt zünden, der gegenüber einem optimalen Zündzeitpunkt auf der Grundlage eines Mischungsverhältnisses vor dem Betanken, das in den Mischungsverhältnis-Speichermitteln (42) gespeichert ist, verzögert ist.

9. Steuereinrichtung nach Anspruch 4, wobei die Kraftstoffzufuhreinrichtung (31) ein Kraftstoff-Einspritzventil ist und die Steuereinrichtung ferner eine Einspritzungssteuereinheit (40) einschließt, die eine Einspritzmenge des Kraftstoff-Einspritzventils (31) so steuert, dass ein vorbestimmtes Ziel-Luft-Kraftstoff-Verhältnis erreicht wird.

10. Steuereinrichtung nach Anspruch 4, wobei in einem Fall, in dem ein Betanken durch die Betankungserkennungsmittel (57) erkannt wird,
bevor die Aktivierungsfeststellungsmittel feststellen, dass der Luft-Kraftstoff-Verhältnis-Sensor (56) aktiviert ist, und bevor die Kraftstoffverbrauch-Feststellungsmittel feststellen, dass der Kraftstoff in dem Kraftstoffrohr (35) verbraucht worden ist, die Einspritzungssteuereinheit (40) ein Ziel-Luft-Kraftstoff-Verhältnis auf der Grundlage eines stöchiometrischen Luft-Kraftstoff-Verhältnisses des in den Mischungsverhältnis-Speichermitteln (42) gespeicherten Mischungsverhältnisses festsetzt,
bevor die Aktivierungsfeststellungsmittel feststellen, dass der Luft-Kraftstoff-Verhältnis-Sensor (56) aktiviert ist, und nachdem die Kraftstoffverbrauch-Feststellungsmittel feststellen, dass der Kraftstoff in dem Kraftstoffrohr (35) verbraucht worden ist, die Einspritzungssteuereinheit (40), als ein Ziel-Luft-Kraftstoff-Verhältnis, ein Luft-Kraftstoff-Verhältnis festsetzt, das kleiner ist als das Ziel-Luft-Kraftstoff-Verhältnis auf der Grundlage eines stöchiometrischen Luft-Kraftstoff-Verhältnisses eines Mischungsverhältnisses vor dem Betanken, das in den Mischungsverhältnis-Speichermitteln (42) gespeichert ist, und
nachdem die Aktivierungsfeststellungsmittel feststellen, dass der Luft-Kraftstoff-Verhältnis-Sensor (56) aktiviert ist, und nachdem die Kraftstoffverbrauch-Feststellungsmittel feststellen, dass der Kraftstoff in dem Kraftstoffrohr (35) verbraucht worden ist, die Einspritzungssteuereinheit (40) ein Ziel-Luft-Kraftstoff-Verhältnis auf der Grundlage eines stöchiometrischen Luft-Kraftstoff-Verhältnisses des durch die Mischungsverhältnis-Abschätzungsmittel abgeschätzten Mischungsverhältnisses festsetzt.

11. Reitsitzfahrzeug (1), das eine Steuereinrichtung nach einem der Ansprüche 1 bis 10 umfasst.

12. Verfahren zum Steuern einer Kraftmaschine (4), wobei das Verfahren die folgenden Schritte umfasst:
das Abschätzen eines Mischungsverhältnisses von in einem Kraftstoff enthaltenem Alkohol auf der Grundlage eines Betriebszustandes der Verbrennungskraftmaschine (4),
das Feststellen, ob die Abschätzung abgeschlossen ist, und
das Zünden einer Zündvorrichtung (30) zu einem Zündzeitpunkt, der gegenüber einem optimalen Zündzeitpunkt auf der Grundlage eines tatsächlichen Mischungsverhältnisses verzögert ist, während eines vorbestimmten Zeitraums, bis festgestellt worden ist, dass die Abschätzung abgeschlossen ist.

## Revendications

1. Dispositif de commande pour un moteur à combustion interne (4) présentant un réservoir de carburant (2) et un dispositif d'allumage (30) et capable d'utiliser en tant que carburant au moins un parmi gasoil et alcool ou un assemblage de ceux-ci, le dispositif de commande comprenant :
un moyen de détection de ravitaillement (57) permettant de détecter un ravitaillement du réservoir de carburant (2) ; et
une unité de commande d'allumage (40) comprenant :
un moyen d'estimation de rapport de mélange permettant d'estimer un rapport de mélange d'alcool contenu dans du carburant en se basant sur un état de fonctionnement du moteur à combustion interne (4) ;
un moyen de stockage de rapport de mélange (42) permettant d'enregistrer le rapport de mélange estimé par le moyen d'estimation de rapport de mélange ;
un moyen de détermination d'achèvement d'estimation permettant de déterminer si une estimation est achevée par le moyen d'estimation de rapport de mélange ; et
un moyen de commande d'allumage permettant d'allumer le dispositif d'allumage (30) avec une temporisation d'allumage qui est retardée par rapport à une temporisation d'allumage optimale basée sur un rapport de mélange avant ravitaillement, pendant une période prédéterminée jusqu'à ce que le moyen de détermination d'achèvement d'estimation détermine que l'estimation est achevée après que le moyen de détection de ravitaillement (57) a détecté un ravitaillement.

2. Dispositif de commande selon la revendication 1, comprenant en outre un capteur de rapport air-carburant (56) conçu pour être fourni dans un conduit d'échappement (27) d'un moteur associé (4).

3. Dispositif de commande selon la revendication 2, dans lequel l'unité de commande d'allumage (40) comprend un moyen de détermination d'activation permettant de déterminer si le capteur de rapport air-carburant (56) est activé.

4. Dispositif de commande selon la revendication 3, dans lequel le moyen d'estimation de rapport de mélange est un moyen permettant d'estimer le rapport de mélange d'alcool en se basant sur une valeur de détection du capteur de rapport air-carburant (56), et commence une estimation du rapport de mélange d'alcool après que le moyen de détermination d'activation a déterminé que le capteur de rapport air-carburant (56) est activé.

5. Dispositif de commande selon la revendication 4, dans lequel le moyen de détermination d'achèvement d'estimation détermine que l'estimation est achevée après qu'un temps prédéterminé s'est écoulé à partir du moment où le moyen d'estimation de rapport de mélange commence l'estimation.

6. Dispositif de commande selon la revendication 4 ou 5, dans lequel le moyen de détermination d'achèvement d'estimation détermine que l'estimation est achevée lorsque la valeur du rapport de mélange estimée par le moyen d'estimation de rapport de mélange converge.

7. Dispositif de commande selon l'une quelconque des revendications précédentes, conçu pour une utilisation avec un moteur à combustion interne (4) comprenant un dispositif d'approvisionnement en carburant (31) qui approvisionne en carburant et une conduite d'approvisionnement en carburant (35) qui relie le réservoir de carburant (2) et le dispositif d'approvisionnement en carburant (31), dans lequel l'unité de commande d'allumage comprend en outre :
un moyen de détermination de consommation de carburant permettant de déterminer, après que le moyen de détection de ravitaillement (57) a détecté un ravitaillement, si du carburant présent dans la conduite de carburant (35) avant le ravitaillement a été consommé.

8. Dispositif selon la revendication 7, dans lequel, dans le cas où le moyen de détection de ravitaillement (57) détecte un ravitaillement :
jusqu'à ce que le moyen de détermination de consommation de carburant détermine que le carburant présent dans la conduite de carburant (35) a été consommé, le moyen de commande d'allumage (40) allume le dispositif d'allumage (30) en se basant sur un rapport de mélange avant le ravitaillement qui est enregistré dans le moyen de stockage de rapport de mélange (42) ; et
après que le moyen de détermination de consommation de carburant a déterminé que le carburant présent dans la conduite de carburant (35) a été consommé, jusqu'à ce que le moyen de détermination d'achèvement d'estimation détermine que l'estimation est achevée, le moyen de commande d'allumage (40) allume le dispositif d'allumage (30) avec une temporisation d'allumage qui est retardée par rapport à une temporisation d'allumage optimale basée sur un rapport de mélange existant avant le ravitaillement et qui est enregistré dans le moyen de stockage de rapport de mélange (42).

9. Dispositif de commande selon la revendication 4, dans lequel le dispositif d'alimentation en carburant (31) est un injecteur de carburant, et le dispositif de commande comprend en outre une unité de commande d'injection (40) qui commande une quantité d'injection de l'injecteur de carburant (31) de manière à atteindre un rapport air-carburant cible prédéterminé.

10. Dispositif de commande selon la revendication 4, dans lequel, dans le cas où un ravitaillement est détecté par le moyen de détection de ravitaillement (57) :
avant que le moyen de détermination d'activation détermine que le capteur de rapport air-carburant (56) est activé, et avant que le moyen de détermination de consommation de carburant détermine que le carburant présent dans la conduite de carburant (35) a été consommé, l'unité de commande d'injection (40) ajuste un rapport air-carburant cible en se basant sur un rapport air-carburant stoechiométrique du rapport de mélange avant ravitaillement enregistré dans le moyen de stockage de rapport de mélange (42) ;
avant que le moyen de détermination d'activation détermine que le capteur de rapport air-carburant (56) est activé, et après que le moyen de détermination de consommation de carburant a déterminé que le carburant présent dans la conduite de carburant (35) a été consommé, l'unité de commande d'injection (40) ajuste, en tant que rapport air-carburant cible, un rapport air-carburant qui est inférieur au rapport air-carburant cible en se basant sur un rapport air-carburant stoechiométrique d'un rapport de mélange avant ravitaillement qui est enregistré dans le moyen de stockage de rapport de mélange (42) ; et
après que le moyen de détermination d'activation a déterminé que le capteur de rapport air-carburant (56) est activé, et après que le moyen de détermination de consommation de carburant a déterminé que le carburant présent dans la conduite de carburant (35) a été consommé, l'unité de commande d'injection (40) ajuste un rapport air-carburant cible en se basant sur un rapport air-carburant stoechiométrique du rapport de mélange estimé par le moyen d'estimation de rapport de mélange.

11. Véhicule de type à enfourcher (1) comprenant un dispositif de commande selon l'une quelconque des revendications 1 à 10.

12. Procédé de commande d'un moteur (4), ledit procédé comprenant les étapes consistant à :
estimer un rapport de mélange d'alcool contenu dans un carburant en se basant sur un état de fonctionnement du moteur à combustion interne (4) ;
déterminer si l'estimation est achevée ; et
allumer un dispositif d'allumage (30) avec une temporisation d'allumage qui est retardée par rapport à une temporisation d'allumage optimale basée sur un rapport de mélange réel, pendant une période prédéterminée jusqu'à ce qu'il ait été déterminé que l'estimation est achevée.
